# EUROPÄISCHE PATENTSCHRIFT

(11) **EP 3 152 457 B1**
(45) Veröffentlichungstag und Bekanntmachung des Hinweises auf die Patenterteilung: **01.01.2020**
(21) Anmeldenummer: 15733636.3
(22) Anmeldetag: 03.06.2015
(51) Int. Cl.: F16F 15/18

(54) **DREHSCHWINGUNGSDÄMPFER SOWIE DREHSCHWINGUNGSDÄMPFERSYSTEM**
TORSIONAL VIBRATION DAMPER AND TORSIONAL VIBRATION DAMPER SYSTEM
AMORTISSEUR DE VIBRATIONS DE TORSION ET SYSTÈME AMORTISSEUR DE VIBRATIONS DE TORSION

(30) Priorität: 06.06.2014 DE 202014102645 U
(43) Veröffentlichungstag der Anmeldung: 12.04.2017
(73) Patentinhaber: Kendrion (Markdorf) GmbH, 88677 Markdorf (DE)
(72) Erfinder: GEBHART, Manfred, 78462 Konstanz (DE); GRISCHIN, Alexander, 78467 Konstanz (DE)
(74) Vertreter: Patentanwälte Behrmann Wagner PartG mbB
(86) Internationale Anmeldenummer: PCT/EP2015/062428
(87) Internationale Veröffentlichungsnummer: WO 2015/185654

(56) Entgegenhaltungen:
- JP-A- 2010 144 892
- JP-A- 2010 174 908
- JP-A- 2011 047 434

## Beschreibung

Die Erfindung betrifft eine Vorrichtung zum Übertragen von Drehmomenten, zum Antreiben eines Nebenaggregates, insbesondere einer Lichtmaschine, bevorzugt in einem Kraftfahrzeug, und zur Dämpfung von Drehschwingungen gemäß dem Oberbegriff des Anspruchs 1. Ferner betrifft die Erfindung ein System mit einer solchen Drehmomentübertragungsvorrichtung gemäß Anspruch 11.

Aus der JP 2010 174 908 A ist eine Vorrichtung zum Übertragen von Drehmomenten, umfassend mehrere in Umfangsrichtung nebeneinander angeordnete Permanentmagnetelemente bekannt. Ähnliche Drehmomentübertragungseinrichtungen sind in der JP 2010 144 892 A oder der JP 2011 047 434 A beschrieben.

Aus der EP 1 444 767 B1 ist ein Drehschwingungsdämpfer zum Übertragen eines Drehmomentes von einer von einem Verbrennungsmotor angetriebenen Antriebswelle auf ein Nebenaggregat in einem Kraftfahrzeug bekannt. Der bekannte Drehschwingungsdämpfer zeichnet sich dadurch aus, dass die auf Antriebsmitteln sowie Abtriebsmitteln vorgesehenen kreiszylindrischen Permanentmagnete zur Drehmomentübertragung auf zwei aneinander gegenüberliegenden, jeweils konzentrisch zur Drehachse orientierten Kreisbahnen angeordnet sind, wobei die Pole der Permanentmagnete in axiale Richtung, d.h. hin zu den Stirnseiten der Antriebs- bzw. Abtriebsmittel weisen. Die Permanentmagnete werden zur Fixierung an den Antriebs- und Abtriebsmitteln in der Praxis in stirnseitige Nuten eingelegt und dort mit einer Vergussmasse vergossen, die die Freiräume von den in Umfangsrichtung beabstandeten Permanentmagneten ausfüllt. Die bekannte Drehmomentübertragungsvorrichtung hat sich bewährt.

Es bestehen jedoch Bestrebungen bei gleichem oder minimiertem Bauraum die maximal übertragbaren Drehmomente zu erhöhen (Aufgabe). Zusätzlich oder alternativ bestehen Bestrebungen zu einer einfacheren Konstruktion. Weiterhin soll zusätzlich oder alternativ der Bauraum optimiert (minimiert) und/oder die Magnetflusscharakteristik beeinflusst werden.

Ferner besteht die Aufgabe darin, ein einen derartigen Drehschwingungsdämpfer sowie ein Nebenaggregat, insbesondere eine Lichtmaschine in einem Kraftfahrzeug umfassendes System anzugeben. Insbesondere soll der zum Einsatz kommende Drehschwingungsdämpfer zum Antreiben einer Lichtmaschine geeignet sein, die besonders empfindlich gegenüber Drehschwingungen ist.

Diese Aufgabe wird hinsichtlich des Drehschwingungsdämpfers mit den Merkmalen des Anspruchs 1 und hinsichtlich des Systems mit den Merkmalen des Anspruchs 11 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die nach dem Konzept der Erfindung ausgebildete Vorrichtung zum Übertragen von Drehmomenten und zur Drehschwingungsdämpfung ist speziell ausgebildet für die Übertragung von Drehmomenten zum Antreiben eines Nebenaggregates, insbesondere in einem Kraftfahrzeug, wobei im eingebauten Zustand Antriebsmittel der Vorrichtung über einen Verbrennungsmotor angetrieben, d.h. um eine Drehachse rotiert werden. Das Drehmoment wird von den Antriebsmitteln auf mit dem Nebenaggregat, insbesondere über einen Riementrieb gekoppelte Abtriebsmittel übertragen, die um dieselbe Drehachse rotiert werden. Die Abtriebsmittel und die Antriebsmittel sind relativ zueinander um die vorgenannte gemeinsame Drehachse rotierbar, um Drehschwingungen dämpfen zu können. Erfindungsgemäß ist zur Relativdrehwinkelbegrenzung mindestens eine mechanische Mitnahmeverbindung, vorzugsweise mehrere in Umfangsrichtung beabstandete mechanische Mitnahmeverbindungen vorgesehen, wobei es besonders bevorzugt ist, wenn im Falle von mehreren Mitnahmeverbindungen diese auf den gleichen Radius bezogen auf die Drehachse angeordnet sind. Die Permanentmagnetmittel sind axial ausgerichtet, d.h. die Pole (Polflächen) der Permanentmagnetmittel befinden sich in einer sich senkrecht zur Drehachse erstreckenden Radialebene, sind also axial ausgerichtet bzw. verlaufen parallel zu den Stirnseiten der Antriebs- und/oder Abtriebsmittel. Um besonders große Drehmomente übertragen zu können ist es von besonderem Vorteil, wenn sowohl an den Antriebsmitteln als auch an den Abtriebsmitteln Permanentmagnetmittel vorgesehen sind, die, insbesondere unter Einhaltung eines Axialspaltes, einander gegenüberliegen. Denkbar ist es jedoch auch, dass entweder ausschließlich die Abtriebsmittel oder ausschließlich die Antriebsmittel Permanentmagnetmittel aufweisen und das jeweils gegenüberliegende Bauteil bzw. Rotierteil den Permanentmagnetmitteln gegenüberliegend ein den magnetischen Fluss leitendes Material, insbesondere in Form einer Einlage, beispielsweise einer Stahleinlage, aufweist.

Die Erfindung ist gekennzeichnet durch drei im Folgenden zu erläuternde Optionen, die zur Lösung entsprechender Aufgaben einzeln oder in beliebiger Kombination realisierbar sind.

Gemäß einer ersten Option zum Erhöhen des maximal übertragbaren Drehmomentes (bei gleicher oder auch reduzierter Baugröße) ist zur magnetischen Flussdichtenerhöhung vorgesehen, dass die die Permanentmagnetmittel bildenden Einzel-Permanentmagnetelemente, die beispielsweise aus einem permanentmagnetischen Vollmaterial, bevorzugt einem Hartmagnetmaterial, insbesondere aus einem Seltenerdmaterial ausgebildet sein können, in Umfangsrichtung dicht nebeneinander angeordnet sind, d.h. aneinander angrenzen. Bevorzugt liegen hierzu zwei in Umfangsrichtung benachbarte Permanentmagnete mit jeweils einer Kontaktfläche unmittelbar aneinander an. Auch ist eine Ausführungsform denkbar, bei der die Permanentmagnetelemente über eine dünne Klebstoffschicht, von vorzugsweise weniger als 2mm, noch weiter bevorzugt weniger als 1mm Dickenerstreckung in Umfangsrichtung, aneinander festgelegt sind. Durch die enge Packung der Permanentmagnetelemente wird der für die Permanentmagnetmittel stirnseitig zur Verfügung stehende Bauraum optimal ausgenutzt, wodurch verglichen mit dem Stand der Technik höhere magnetische Flussdichten bei gleicher Stirnflächengröße der Antriebs- und/oder Abtriebsmittel erreicht werden können. Insbesondere werden die im Stand der Technik mit Vergussmasse ausgefüllten Freiflächen optimal genutzt. Die beschriebene Ausführungsform mit in Umfangsrichtung aneinander angrenzenden, d.h. entweder unmittelbar aneinander anliegenden oder minimal über eine Klebstoffschicht von vorzugsweise weniger als 2mm, insbesondere weniger als 1mm beabstandeten Permanentmagnetelementen ermöglichen es auch auf von Permanentmagnetvollmaterial abweichendes Material auszuweichen. So können die Permanentmagnetelemente auch mit im Vergleich zur Hartmagnetmaterial weniger stark magnetischem Material ausgebildet sein, beispielsweise aus Sintermaterial. Auch ist es denkbar Permanentmagnetelemente als Kunststoffformteile, insbesondere Kunststoffspritzgussteile vorzusehen, wobei die Kunststoffformteile Permanentmagnetpartikel beinhalten, die in einer Kunststoffmatrix gefangen bzw. fixiert sind.

Als eine zusätzlich zur ersten und/oder einer später noch zu erläuternden dritten Option, oder alternativ auch in Alleinstellung realisierbaren zweiten Option ist vorgesehen, dass die Permanentmagnetmittel mindestens ein Kunststoffformteil umfassen, welches Permanentmagnetpartikel enthält.

Das Kunststoffformteil kann beispielsweise als Kunststoffspritzgussteil ausgebildet sein. Denkbar ist es auch, wenn die Permanentmagnetmittel mindestens ein Sintermaterialformteil aus permanentmagnetischen Partikel umfassen. Eine derartige Ausbildung der Permanentmagnetmittel ist bei Drehmomentschwingungsdämpfern nicht bekannt, insbesondere da Magnet-Formteiien sich durch eine geringe Magnetkraft ausweisen, woraus ein vergleichsweise geringes maximal übertragbares Drehmoment resultieren. Jedoch lassen sich die Formteile, insbesondere die Kunststoffformteile oder Sintermaterialformteile kostengünstig in nahezu beliebigen Formen herstellen, so dass auch auf diese Weise die zur Verfügung stehenden Stirnseitenflächen optimal als "Magnetflächen" ausgenutzt werden können und im Endeffekt aufgrund der resultierenden großen Magnetflächen auch vergleichsweise große Drehmomente übertragen werden können. Ganz besonders bevorzugt ist es, wenn die Formteile so ausgebildet sind, dass diese sich jeweils mindestens über einen Umfangswinkel von 60°, noch weiter bevorzugt, über zumindest 90°, ganz besonders bevorzugt über zumindest näherungsweise mindestens 180° erstrecken. Auch ist es möglich, dass die Formteile als zumindest näherungsweise vollständiger (geschlossener) Ring ausgebildet sind, um somit optimal den zur Verfügung stehenden Bauraum auszunutzen und die Montage wesentlich zu erleichtern, da wesentlich weniger Einzelteile montiert werden müssen als im Stand der Technik.

Gemäß einer dritten, zusätzlich zur ersten und/oder zweiten Option oder in Alleinstellung realisierbaren Option ist vorgesehen, dass die Permanentmagnetmittel, insbesondere Permanentmagnetelemente der Permanentmagnetmittel, auf einer von einer konzentrischen Kreisbahn abweichenden geometrischen Ringbahn angeordnet sind, insbesondere auf einer zur Drehachse konzentrischen Ringbahn. Als besonders bevorzugt hat es sich herausgestellt, wenn die Permanentmagnetmittel, insbesondere die die Permanentmagnetmittel bildenden Permanentmagnetelemente auf einer elliptischen Bahn angeordnet sind, wobei das Zentrum der Ellipse bevorzugt durchsetzt wird von der gemeinsamen Drehachse der Abtriebs- und Antriebsmittel, insbesondere mindestens einer Antriebsscheibe und mindestens einer Abtriebsscheibe. Bevorzugt befinden sich die geometrischen Flächenzentren der Polflächen der Permanentmagnetmittel auf der vorerwähnten Ringbahn. Im Falle der Realisierung von Permanentmagnetmitteln sowohl an den Abtriebsmitteln als auch an den Antriebsmitteln ist es bevorzugt, wenn dort identische Ringbahnen aneinander gegenüberliegend vorgesehen sind, insbesondere zwei Ellipsenbahnen. Durch die Realisierung von einer konzentrischen Kreisbahn abweichenden Ringbahnen, insbesondere Ellipsenbahnen, kann ebenfalls der zur Verfügung stehende Bauraum optimal ausgenutzt werden. Zudem können die Permanentmagnetmittel radial vergleichsweise weit außen an den Antriebsund/oder Abtriebsmitteln angeordnet werden, woraus ein großes übertragbares Drehmoment resultiert. Gleichzeitig wird durch die von einer konzentrischen Kreisbahn abweichende Ringbahn, insbesondere Ellipsenbahn, Raum geschaffen für die fakultative Anordnung von eingangs bereits erwähnten Mitnahmeverbindungen zur Begrenzung des Relativverdrehwinkels.

Gemäß der Erfindung ist die Relativverdrehbarkeit der Antriebs- und Abtriebsmittel über mindestens eine mechanische Mitnahmeverbindung begrenzt ist, wobei auch auf eine solche verzichtet werden kann. Das Vorsehen einer mechanischen Mitnahmeverbindung ist insbesondere vorteilhaft bei der Realisierung der Option mit einer von einer konzentrischen Kreisringbahn abweichend geformten Ringbahn, entlang derer die Permanentmagnetmittel angeordnet sind, da bei einer solchen Anordnung ausreichend Raum ist für die Anordnung entsprechender Mitnahmeverbindung bei gleichzeitiger weit radial nach außen reichenden Permanentmagnetmittel, was in einem großen übertragbaren Drehmoment resultiert.

Besonders bevorzugt ist eine Ausführungsvariante der Erfindung, bei der die Permanentmagnetmittel, insbesondere einzelne Permanentmagnetelemente mit den Antriebsmitteln und/oder den Abtriebsmitteln (je nachdem, wo Permanentmagnetmittel vorgesehen sein sollen) verklebt sind, insbesondere in einer stirnseitigen bevorzugt umlaufenden Nut oder sonstige Aussparung/Vertiefung. Diese Nut kann gemäß einer ersten Alternative eine konzentrische, kreisförmige oder teilkreisförmige Nut sein. Alternativ ist es denkbar, eine von einer konzentrischen Kreisnut abweichende Nutform, insbesondere eine teilelliptische Nut oder eine vollelliptische Nut zu realisieren. Bevorzugt ist zur Realisierung einer Klebeverbindung zum Fixieren der Permanentmagnetmittel in einer stirnseitigen Aussparung, insbesondere in einer stirnseitigen Nut eine gestufte Nutform vorgesehen, wobei sich die Permanentmagnetmittel vorzugsweise in einem Bereich der Nut unmittelbar an den Antriebs- bzw. Abtriebsmitteln abstützen und in einem weiteren, insbesondere mittleren Bereich der Nut über die Kleberschicht von einem vertieften Nutgrund beabstandet sind. Zusätzlich oder alternativ zu einem Verkleben, insbesondere mit einer dünnen Kleberschicht, von vorzugsweise weniger als 2mm, noch weiter bevorzugt weniger als 1mm Dicke, ist es bevorzugt, die Permanentmagnetmittel mechanisch an den Abtriebsmitteln und/oder den Antriebsmitteln zu fixieren, insbesondere durch Verstemmen, was besonders bevorzugt ist bei einer Anordnung der Permanentmagnetmittel in einer, insbesondere wie zuvor beschrieben ausgebildeten, stirnseitigen Nut.

Besonders zweckmäßig ist es, wenn die Permanentmagnetmittel vergussmittelfrei in einer stirnseitigen Vertiefung, insbesondere in einer sich in Umfangsrichtung erstreckenden, beispielsweise kreisringförmigen oder ellipsenringförmigen Nut aufgenommen sind. Eine solche Ausführungsform ist insbesondere dann von Vorteil, wenn die Permanentmagnetelemente der Permanentmagnetmittel in Umfangsrichtung aneinander angrenzen, d.h. entweder unmittelbar aneinander anliegen oder weniger als 2mm voneinander in Umfangsrichtung beabstandet sind.

Im Stand der Technik werden die Permanentmagnetmittel in der Regel von kreiszylinderscheibenförmigen Seltenerdmagneten gebildet. Insbesondere bei einer Ausführungsform miteinander angrenzenden Permanentmagnetelementen ist es zur optimalen Bauraumausnutzung von Vorteil, wenn die Permanentmagnetmittel eine Ringsegmentkontur aufweisen, insbesondere eine Kreisringsegmentkontur oder eine Ellipsenringsegmentkontur was besonders bevorzugt ist. Derartige Permanentmagnetelemente können zylindrisch ausgestaltet sein, d.h. parallele Mantelflächenabschnitte aufweisen oder in axialer Richtung abgeschrägte Mantelflächen.

Wie bereits erwähnt ist es denkbar, dass die aneinander angrenzenden Permanentmagnetelemente in Umfangsrichtung über eine dünne Klebstoffschicht voneinander beabstandet sind. Besonders zweckmäßig ist es jedoch, wenn die aneinander angrenzenden Permanentmagnete unmittelbar mit jeweils einer bezogen auf eine Drehachse der Vorrichtung in einer radialen Ebene liegenden Kontaktflächen aneinander anliegen.

Zur Minimierung des Montageaufwandes und für eine optimale Flächenausnutzung ist es von Vorteil, wenn für den Fall der Ausbildung der Permanentmagnetmittel als Kunststoffformteile oder Sinterformteile, die Kunststoffformteile oder Sinterformteile entweder eine geschlossene Ringform aufweisen, beispielsweise eine Kreisringform oder eine Ellipsenform oder sich in Umfangsrichtung über mindestens 45°, vorzugsweise über mindestens 90° oder vorzugsweise über mindestens 120° jeweils um die Drehachse erstrecken, insbesondere in Form einer Ringsegmentform, beispielsweise einer Kreisringsegmentform oder einer Eflipsenringsegmentform.

Besonders bevorzugt ist es, wenn für den Fall der Realisierung einer, insbesondere konzentrischen, noch weiter bevorzugt von einer konzentrischen Kreisbahn abweichenden, geometrischen Ringbahn diese spiegelsymmetrisch, beispielsweise als Ellipsenbahn, ausgebildet wird.

Wie eingangs bereits angedeutet, ist es zur Übertragung besonders großer Drehmomente von Vorteil, wenn sowohl die Abtriebsmittel als auch die Antriebsmittel Permanentmagnetmittel tragen, wobei sich die Permanentmagnetmittel der Bauteile, insbesondere unter Einhaltung eines geringen Axialspaltes gegenüberliegen, insbesondere auf identisch gestalteten Ringbahnen. Es ist jedoch auch möglich, nur die Antriebsmittel oder nur die Abtriebsmittel mit Permanentmagnetmitteln zu versehen und gegenüberliegend einen diesen zugeordneten, dem magnetischen Fluss leitenden Materialabschnitt, insbesondere eine Materialeinlage, d.h. ein in einer Aussparung aufgenommenes, magnetisches Material, wobei die Einlage beispielsweise aus Stahl oder einem Weicheisenmaterial gestaltet sein kann.

Konstruktiv gibt es zur Gestaltung der Drehmomentübertragungsvorrichtung unterschiedliche Möglichkeiten. Grundsätzlich ist es möglich, dass die Antriebsmittel und die Abtriebsmittel jeweils nur eine einzige Drehmomentübertragungsscheibe aufweisen, die sich einander gegenüberliegen, wobei auf zumindest einer der einander zugewandten Stirnseiten der Drehmomentübertragungsscheiben Permanentmagnetmittel vorgesehen sind. Die Drehmomentübertragungsscheiben sind um die gemeinsame Drehachse verdrehbar und unter Einhaltung eines axialen Spaltes einander gegenüberliegend angeordnet. Alternativ ist es zur Erhöhung der Leistungsdichte denkbar, dass die Antriebsmittel oder die Abtriebsmittel mindestens zwei axial beabstandete drehfest miteinander verbundene Drehmomentübertragungsscheiben aufweisen, die eine Drehmomentübertragungsscheibe jeweils anderen Mittel, d.h. der Abtriebsmittel oder der Antriebsmittel sandwichartig zwischen sich aufnehmen. Bevorzugt sind an der zwischen zwei Drehmomentübertragungsscheiben angeordneten Drehmomentübertragungsscheibe auf beiden axialen Stirnseiten Permanentmagnetmittel vorgesehen oder alternativ flussleitendes Material, insbesondere in Form jeweils einer Materialeinlage, beispielsweise Stahleinlage.

Die Erfindung führt auch auf ein System mit einer vom Konzept der Erfindung ausgebildeten Vorrichtung zur Übertragung von Drehmomenten und zur Drehschwingungsdämpfung, wobei mit den Abtriebsmitteln der Vorrichtung ein Nebenaggregat, insbesondere eine Lichtmaschine, noch weiter bevorzugt in einem Kraftfahrzeug, gekoppelt ist, beispielsweise über einen Riementrieb. In diesem Fall, tragen die Abtriebsmittel bevorzugt eine Riemenscheibe. Bevorzugt ist den Antriebsmitteln der Vorrichtung ein Verbrennungsmotor zugeordnet, der die Antriebsmittel über eine entsprechende Welle antreibt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis 8: unterschiedliche Ansichten einer Vorrichtung zur Übertragung von Drehmomenten und zur Drehschwingungsdämpfung sowie von Einzelbauteilen dieser Vorrichtung,
- Fig. 9: eine Schnittansicht einer alternativen Ausführungsform mit einer sandwich-artigen Anordnung von Antriebs- und Abtriebsmitteln, und
- Fig. 10 und 11: eine Ausführungsform von Abtriebs- und Antriebsmitteln mit entlang von konzentrischen Ellipsenbahnen angeordneten Permanentmagnetmitteln

In den Figuren sind gleiche Elemente und Elemente mit der gleichen Funktion mit den gleichen Bezugszeichen gekennzeichnet.

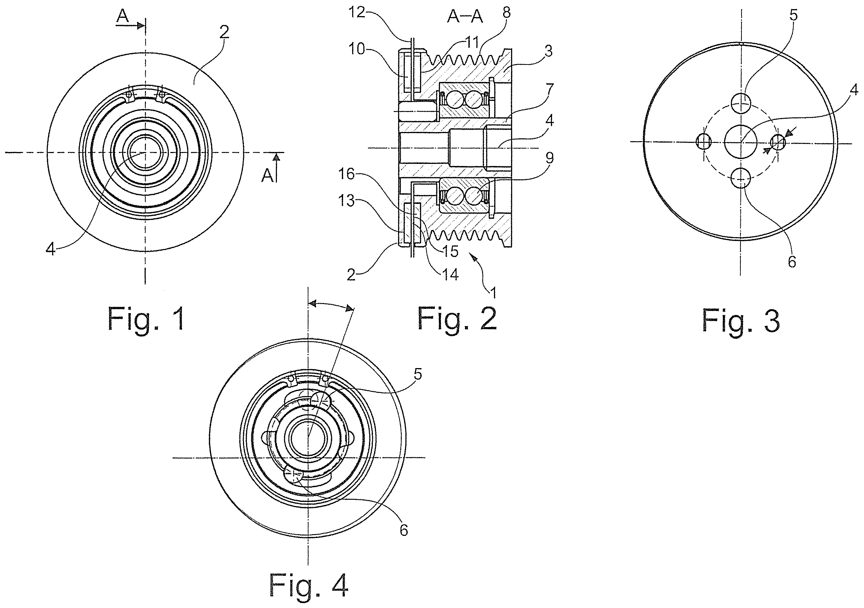

In den Fig. 1 bis 8 ist in teilweise geschnittenen Darstellungen und in Detaildarstellungen ein Ausführungsbeispiel einer Vorrichtung 1 zur Übertragung von Drehmomenten und zur Drehschwingungsdämpfung gezeigt, bei welcher sowohl von einem Verbrennungsmotor angetriebene Antriebsmittel 2 als auch die diesem zugeordneten Abtriebsmittel 3 jeweils eine Permanentmagnetmittel tragende Scheibe (Drehmomentübertragungsscheibe) umfassen.

Die Antriebsmittel 2 und Abtriebsmittel 3 sind um eine gemeinsame Drehachse 4 rotierbar, wobei die Relativverdrehbarkeit über zwei Mitnahmeverbindungen 5, 6 begrenzt ist. In dem gezeigten Ausführungsbeispiel ist eine Relativverdrehbarkeit um ± 20° realisiert.

Wie sich insbesondere aus einer Zusammenschau der Fig. 3 und 4 ergibt, befinden sich die Mitnahmeverbindungen 5, 6 auf einer konzentrischen Kreisbahn bezogen auf die gemeinsame Drehachse 4.

Aus Fig. 2 ist zu entnehmen, dass die Antriebsmittel 2 drehfest mit einer von dem nicht gezeigten Verbrennungsmotor antreibbaren Welle 7 verbunden sind, während die Abtriebsmittel 3, welche als Riemenscheibe 8 zur Kopplung mit einem Nebenaggregat, insbesondere einer Lichtmaschine ausgebildet sind, über ein hier als Doppelwälzlager ausgebildetes Wälzlager 9 relativ zur Welle 7 verdrehbar sind.

Die Antriebsmittel 2 und die Abtriebsmittel 3 tragen stirnseitig jeweils Permanentmagnetmittel 10, 11, wobei sich die Permanentmagnetmittel 10, 11 axial unter Einhaltung eines Axialspaltes 12 gegenüberliegen. Die Pole 13, 14, 15, 16 der Permanentmagnetmittel 10, 11 sind axial orientiert, d.h. befinden sich jeweils in einer Radialebene bezogen auf die Drehachse 4.

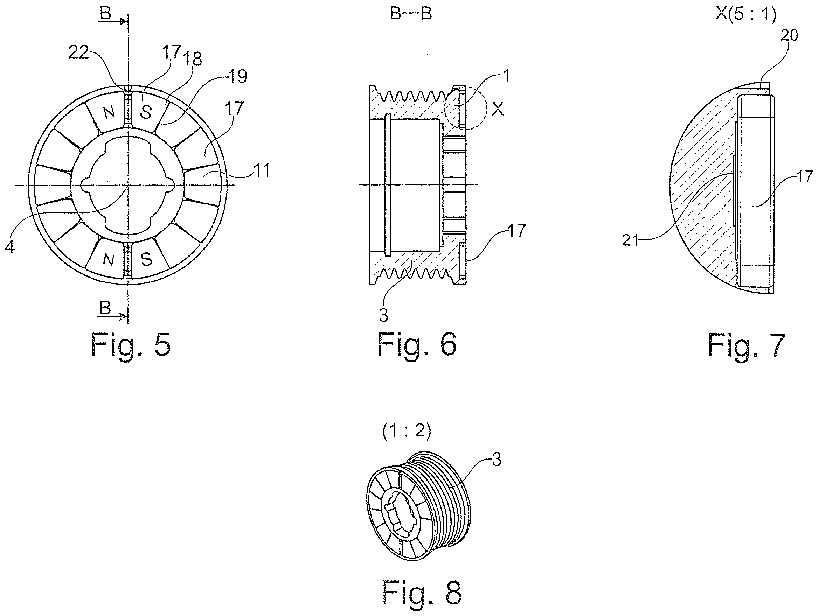

Aus Fig. 5 ist die Anordnung der Permanentmagnetmittel 11 ersichtlich. Zu erkennen ist, dass in dem gezeigten Ausführungsbeispiel die Permanentmagnetmittel 11 (und auch die Permanentmagnetmittel 10) von Permanentmagnetelementen 17, beispielsweise aus einem Seltenerdmaterial gebildet sind, wobei die Permanentmagnetelemente 17 auch bei den Antriebs- und den Abtriebsmitteln jeweils auf einer konzentrischen Ringbahn um die Drehachse 4 angeordnet sind, wobei die Polung alternierend in Umfangsrichtung wechselt. Zu erkennen ist ferner, dass die Permanentmagnetelemente 17 in dem konkreten Ausführungsbeispiel eine Kreisringsegmentform aufweisen.

Die Permanentmagnetelemente 17 grenzen in Umfangsrichtung aneinander an. In dem konkreten Ausführungsbeispiel berühren sich hierzu jeweils aneinander zugewandte und in jeweils einer Radialebene liegende Kontaktflächen 18, 19, wobei alternativ zwischen diesen Kontaktflächen 18, 19 eine dünne Kleberschicht vorgesehen sein kann.

Die Permanentmagnetelemente 17 sind in einer hier kreisringförmigen, stirnseitigen Nut 20 aufgenommen, wobei die Nut als mehrfach gestufte Nut ausgebildet ist und einen mittleren, vertieften Nutabschnitt 21 zur Aufnahme von Kleber aufweist. Die Permanentmagnetelemente 17 stützen sich innen und radial außen am Nutgrund in einem nicht maximal weit vertieften Nutabschnitt ab.

Wie sich aus Fig. 5 ergibt, sind die Permanentmagnete 17 in zumindest in näherungsweise halbkreisförmigen Gruppen gruppiert. Der Abstand zwischen diesen Gruppen in Umfangsrichtung ist auf Fertigungstoleranzen der Permanentmagnete 17 zurückzuführen. Im Optimalfall wird die zur Verfügung stehende Fläche vollständig mit Permanentmagnetmitteln ausgefüllt, was sich idealerweise durch Formteilpermanentmagnete, insbesondere Sintermaterialmagnetelemente oder noch weiter bevorzugt über Kunststoffformteilmagnete, insbesondere Kunststoffspritzgussmagnete realisieren lässt.

Aus Fig. 5 ist zudem eine (obere) Montagemarkierung für eine erleichterte Montage zu erkennen.

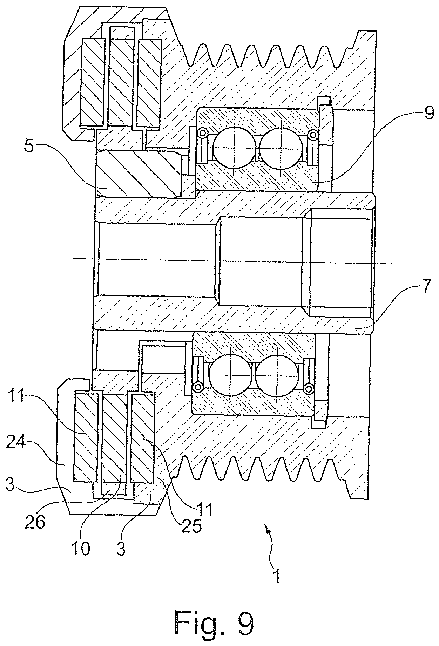

Das Ausführungsbeispiel gemäß Fig. 9 entspricht im Wesentlichen dem Ausführungsbeispiel gemäß den Fig. 1 bis 8, so dass zur Vermeidung von Wiederholungen im Wesentlichen nur auf die Unterschiede eingegangen wird.

Zu erkennen ist, dass die Abtriebsmittel 3 in dem gezeigten Ausführungsbeispiel 2 axial beabstandete Drehmomentübertragungsscheiben 24, 25 aufweisen, die in dem gezeigten Ausführungsbeispiel radial außen miteinander verbunden sind. Die Drehmomentübertragungsscheiben 24, 25 tragen jeweils Permanentmagnetmittel 11.

Zwischen den Drehmomentübertragungsscheiben 24, 25 der Abtriebsmittel ist eine Drehmomentübertragungsscheibe 26 der Antriebsmittel vorgesehen, die Permanentmagnetmittel 10 trägt und die sandwich-artig zwischen den Drehmomentübertragungsscheiben 24, 25 der Abtriebsmittel unter Einhaltung jeweils eines Axialspaltes aufgenommen ist.

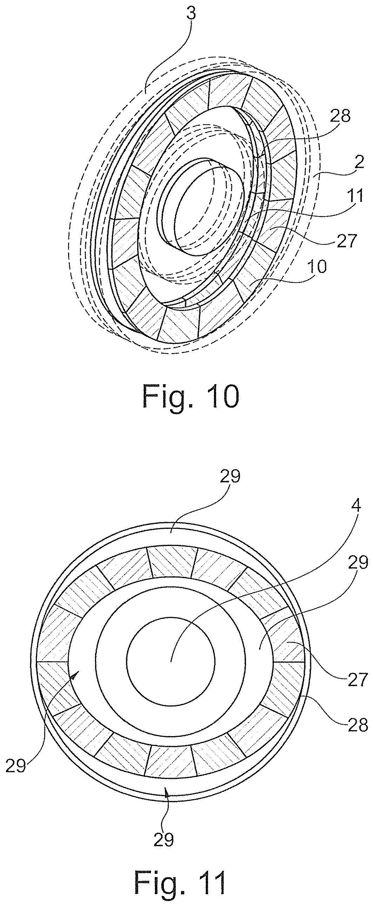

Aus den Fig. 10 bis 11 ist eine alternative Möglichkeit zur Anordnung von Permanentmagnetmitteln 10, 11 an den Abtriebsmitteln 3 und den Antriebsmitteln 2 gezeigt. Zu erkennen ist, dass die Permanentmagnetmittel 10, 11 auf einer von einer konzentrischen Kreisbahn abweichenden, hier ebenfalls konzentrischen Ringbahn 27 bzw. 28 angeordnet sind. Die Ringbahnen 27, 28 sind gleich konturiert und liegen axial einander gegenüber, In dem konkreten Ausführungsbeispiel sind die Permanentmagnetmittel 10, 11 jeweils von einzelnen Permanentmagnetelementen gebildet, können alternativ jedoch, wie im allgemeinen Beschreibungsteil erläutert ausgestaltet sein.

Aus Fig. 11 ergibt sich die Lage der elliptischen Ringbahnen 27, 28 zur Drehachse 4.

Durch die elliptische Ausgestaltung der Ringbahnen und in der Folge der Permanentmagnetmittel und vorzugsweise auch von die Permanentmagnetmittel aufnehmenden Vertiefungen bzw. Aussparungen, insbesondere Nuten ergibt sich eine von dem Stand der Technik unterschiedliche Übertragungscharakteristik. Insbesondere wird in den mit dem Bezugszeichen 29 gekennzeichten Flächenbereich Raum geschaffen für nicht gezeigte, fakultative Mitnahmeverbindungen zur Begrenzung der Relativverdrehbarkeit der Antriebsmittel und der Abtriebsmittel relativ zueinander.

In dem konkreten Ausführungsbeispiel ist vorgesehen, dass die Permanentmagnetelemente der Permanentmagnetmittel in Umfangsrichtung aneinander angrenzen, was jedoch nicht zwingend zur Realisierung der elliptischen Kreisbahnen vorgesehen sein muss.

Bei sämtlichen Ausführungsbeispielen sind einander gegenüberliegende Permanentmagnetmittel vorgesehen. Es ist auch möglich, auf einer Seite (Abtriebsseite oder Antriebsseite) Permanentmagnetmittel durch flussleitendes Material, insbesondere eine (in einer Aussparung aufgenommenen) Materialeinlage, zu ersetzen.

### Bezugszeichenliste

- 1: Vorrichtung
- 2: Antriebsmittel
- 3: Abtriebsmittel
- 4: Drehachse
- 5: Mitnahmeverbindung
- 6: Mitnahmeverbindung
- 7: Welle
- 8: Riemenscheibe
- 9: Wälzlager
- 10: Permanentmagnetmittel
- 11: Permanentmagnetmittel
- 12: Axialspalte
- 13: Pol
- 14: Pol
- 15: Pol
- 16: Pol
- 17: Permanentmagnetelemente
- 18: Kontaktfläche
- 19: Kontaktfläche
- 20: Nut
- 21: vertiefter Nutabschnitt
- 22: Montagemarkierung
- 24: Drehmomentübertragungsscheibe
- 25: Drehmomentübertragungsscheibe
- 26: Drehmomentübertragungsscheibe
- 27: elliptische Ringbahn
- 28: elliptische Ringbahn
- 29: Flächenbereich

## Patentansprüche

1. Vorrichtung (1) zum Übertragen von Drehmomenten zum Antreiben eines Nebenaggregates, insbesondere einer Lichtmaschine, bevorzugt in einem Kraftfahrzeug, und zur Dämpfung von Drehschwingungen, umfassend von einem Verbrennungsmotor um eine Drehachse (4) antreibbare Antriebsmittel (2) sowie zum Antreiben des Nebenaggregates ausgebildete und angeordnete, um die Drehachse (4) rotierbare Abtriebsmittel (3), wobei zumindest eine axiale Stirnseite der Antriebsmittel (2) und/oder der Abtriebsmittel (3) Permanentmagnetmittel (10, 11) trägt, durch welche zwischen den Antriebsmitteln (2) und den Abtriebsmitteln (3) Drehmomente übertragbar und Drehschwingungen dämpfbar sind, wobei die Pole (13, 14, 15, 16) der Permanentmagnetmittel (10, 11) in mindestens einer Radialebene angeordnet sind, wobei die Permanentmagnetmittel (10, 11) mehrere in Umfangsrichtung nebeneinander angeordnete Permanentmagnetelemente (17) aufweisen,
wobei diese Permanentmagnete (17) aneinander angrenzen, insbesondere unmittelbar aneinander anliegen oder über eine Klebeschicht mit einer Dickenerstreckung von weniger als 2mm aneinander festgelegt sind,
und/oder
wobei die Permanentmagnetmittel (10, 11) mindestens ein Kunststoffformteil, insbesondere Kunststoffspritzgussteil und/oder ein Sintermaterialformteil umfassen,
und/oder
wobei die Permanentmagnetmittel (10, 11) auf einer von einer konzentrischen Kreisbahn abweichenden, geometrischen, vorzugsweise konzentrischen, Ringbahn, bevorzugt einer Ellipsenbahn, (27, 28) angeordnet sind,
**dadurch gekennzeichnet,**
**dass** eine relative Verdrehbarkeit der Antriebs- (2) und Abtriebsmittel (3) durch mindestens eine mechanische Mitnahmeverbindung (5, 6) begrenzt ist, wobei bevorzugt mehrere mechanische Mitnahmeverbindungen (5, 6) auf einer konzentrisch zur Drehachse (4) verlaufenden Kreisbahn oder einer nicht kreisförmigen Ringbahn angeordnet sind.

2. Vorrichtung nach Anspruch 1,
**dadurch gekennzeichnet,**
**dass** die Permanentmagnetmittel (10, 11) mit den Antriebsmitteln (2) und/oder den Abtriebsmitteln (3) verklebt und/oder mechanisch fixiert, insbesondere verstemmt, sind.

3. Vorrichtung nach einem der Ansprüche 1 oder 2,
**dadurch gekennzeichnet,**
**dass** die Permanentmagnetmittel (10, 11) vergussmittelfrei in einer stirnseitigen Vertiefung, insbesondere einer sich in Umfangsrichtung erstreckenden, Nut (20) in den Antriebsmitteln (2) und/oder den Abtriebsmitteln (3) aufgenommen sind.

4. Vorrichtung nach einem der vorhergehenden Ansprüchen,
**dadurch gekennzeichnet,**
**dass** die aneinander angrenzenden Permanentmagnetelemente (17) der Permanentmagnetmittel (10, 11) eine Ringsegmentkontur, insbesondere eine Kreisringsegmentkontur oder Ellipsenringsegmentkontur aufweisen.

5. Vorrichtung nach einem der vorhergehenden Ansprüchen,
**dadurch gekennzeichnet,**
**dass** die aneinander angrenzenden Permanentmagnetelemente (17) mit jeweils einer in einer bezogen auf eine Drehachse (4) der Vorrichtung radialen Ebene liegenden Kontaktfläche (18, 19) aneinander anliegen.

6. Vorrichtung nach einem der vorhergehenden Ansprüche,
**dadurch gekennzeichnet,**
**dass** das mindestens eine Kunststoffformteil eine Ringform, insbesondere eine Kreisringform oder eine Ellipsenringform, oder eine, sich vorzugsweise über einen Umfangswinkel von mindestens 45°, bevorzugt von mindestens 90°, noch weiter bevorzugt mindestens 120°, um die Drehachse (4) erstreckende, Ringsegmentform, insbesondere eine Kreisringsegmentform oder eine Ellipsenringsegmentform, aufweist.

7. Vorrichtung nach einem der vorhergehenden Ansprüche,
**dadurch gekennzeichnet,**
**dass** die Permanentmagnetelemente (17) und/oder die auf einer von einer Kreisringbahn abweichenden Ringbahn (27, 28) angeordneten Permanentmagnetmittel (10, 11) aus einem permanentmagnetischen Vollmaterial, bevorzugt einem Hartmagnetmaterial, und/oder als Kunststoffformteile und/oder als Sintermaterialformteile ausgebildet sind.

8. Vorrichtung nach einem der vorhergehenden Ansprüche,
**dadurch gekennzeichnet,**
**dass** die von einer konzentrischen Kreisbahn abweichende, geometrische, Ringbahn (27, 28) spiegelsymmetrisch ist.

9. Vorrichtung nach einem der vorhergehenden Ansprüche,
**dadurch gekennzeichnet,**
**dass** ausschließlich die Antriebsmittel (2) Permanentmagnetmittel (10, 11) zur Drehmomentübertragung und die Abtriebsmittel (3) einen diesen zugeordneten Materialabschnitt, insbesondere eine Materialeinlage, aus einem den magnetischen Fluss leitenden Material aufweisen, oder umgekehrt.

10. Vorrichtung nach einem der vorhergehenden Ansprüche,
**dadurch gekennzeichnet,**
**dass** die Antriebsmittel (2) und die Abtriebsmittel (3) jeweils ausschließlich eine Drehmomentübertragungsscheibe (24, 25) aufweisen, wobei die Drehmomentübertragungsscheiben axial, insbesondere mit dazwischen liegendem Spalt (12) einander gegenüberliegen, oder dass die Antriebsmittel (2) mindestens zwei Drehmomentübertragungsscheiben aufweisen, die sandwichartig eine Drehmomentübertragungsscheibe der Abtriebsmittel (3) zwischen sich aufnehmen, oder dass die Abtriebsmittel (3) mindestens zwei Drehmomentübertragungsscheiben aufweisen, die sandwichartig eine Drehmomentübertragungsscheibe der Antriebsmittel (2) zwischen sich aufnehmen.

11. System mit einer Vorrichtung nach einem der vorhergehenden Ansprüche, die drehmomentübertragend mit einem Nebenaggregat, insbesondere eine Lichtmaschine, bevorzugt in einem Kraftfahrzeug gekoppelt ist.

## Claims

1. A device (1) for transmitting torques for driving an auxiliary unit, in particular an alternator, preferably in a motor vehicle, and for damping torsional vibrations, said device comprising drive means (2) being drivable about an axis of rotation (4) by a combustion engine and output means (3) being rotatable about the axis of rotation (4) and being configured and disposed for driving the auxiliary unit, at least one axial end face of the drive means (2) and/or of the output means (3) carrying permanent magnet means (10, 11) allowing torques to be transmitted between the drive means (2) and the output means (3) and allowing torsional vibrations to be dampened, the poles (13, 14, 15, 16) of the permanent magnet means (10, 11) being disposed in at least one radial plane, the permanent magnet means (10, 11) having several permanent magnet elements (17) disposed adjacent to one another in the circumferential direction,
said permanent magnets (17) being directly adjacent to one another, in particular being in direct contact with one another or being fixed to one another via an adhesive layer having a thickness of less than 2 mm,
and/or
the permanent magnet means (10, 11) comprising at least one molding made of plastic, in particular an injection-molded part made of plastic and/or a molding made of a sintered material,
and/or
the permanent magnet means (10, 11) being disposed on a geometrical, preferably concentric circular orbit, preferably an elliptical orbit, (27, 28) deviating from a concentric orbit,
**characterized in that**
a relative rotation of the drive means (2) and output means (3) is limited by at least one mechanical driving connection (5, 6), preferably several mechanical driving connections (5, 6) being disposed on a circular orbit extending concentrically to the axis of rotation (4) or on a non-circular annular orbit.

2. The device according to claim 1,
**characterized in that**
the permanent magnet means (10, 11) are glued together with and/or mechanically fixed, in particular caulked, to the drive means (2) and/or the output means (3).

3. The device according to claim 1 or 2,
**characterized in that**
the permanent magnet means (10, 11) are accommodated without a grout in a recess at the end face, in particular a groove (20) which extends in the circumferential direction in the drive means (2) and/or the output means (3).

4. The device according to any one of the preceding claims,
**characterized in that**
the adjacent permanent magnet elements (17) of the permanent magnet means (10, 11) have a ring segment contour, in particular a circular ring segment contour or elliptical ring segment contour.

5. The device according to any one of the preceding claims,
**characterized in that**
the adjacent permanent magnet elements (17) are in contact with one another via respective contact surfaces (18, 19) which are located in a radial plane in relation to an axis of rotation (4) of the device.

6. The device according to any one of the preceding claims,
**characterized in that**
the at least one molding made of plastic has a ring shape, in particular a circular ring shape or an elliptical ring shape, or a ring segment shape, in particular a circular ring segment shape or an elliptical ring segment shape, which preferably extends about the axis of rotation (4) across a circumferential angle of at least 45°, more preferably of at least 90°, particularly preferably of at least 120°.

7. The device according to any one of the preceding claims,
**characterized in that**
the permanent magnet elements (17) and/or the permanent magnet means (10, 11) disposed on an annular orbit (27, 28) which deviates from a circular ring orbit are made of a permanent-magnetic solid material, preferably a hard magnet material, and/or realized as moldings made of plastic and/or as moldings made of sintered material.

8. The device according to any one of the preceding claims,
**characterized in that**
the geometrical annular orbit (27, 28) which deviates from a concentric circular orbit is mirror-symmetrical.

9. The device according to any one of the preceding claims,
**characterized in that**
only the drive means (2) have permanent magnet means (10, 11) for transmitting a torque and the output means (3) have a section of material assigned to said means, in particular a material insert, made of a material which conducts the magnetic flux, or vice versa.

10. The device according to any one of the preceding claims,
**characterized in that**
the drive means (2) and the output means (3) each have only one torque transmission disc (24, 25), the torque transmission discs being located axially opposite one another, in particular with an intermediate gap (12), or that the drive means (2) have at least two torque transmission discs which sandwich a torque transmission disc of the output means (3) between them, or that the output means (3) have at least two torque transmission discs which sandwich a torque transmission disc of the drive means (2) between them.

11. A system comprising a device according to any one of the preceding claims, said device being coupled in a torque-transmitting manner to an auxiliary unit, in particular an alternator, preferably in a motor vehicle.

## Revendications

1. Dispositif (1) pour transmettre des couples afin d'entraîner un organe auxiliaire, notamment un alternateur, de préférence dans un véhicule automobile, et pour amortir des vibrations de torsion, le dispositif comprenant des moyens d'entraînement (2) pouvant être entraînés autour d'un axe de rotation (4) par un moteur à combustion et des moyens de sortie (3) pouvant être mis en rotation autour de l'axe de rotation (4) et étant réalisés et disposés afin d'entraîner l'organe auxiliaire, au moins une face frontale axiale des moyens d'entraînement (2) et/ou des moyens de sortie (3) portant des moyens magnétiques permanents (10, 11) par lesquels des couples peuvent être transmis entre les moyens d'entraînement (2) et les moyens de sortie (3) et des vibrations de torsions peuvent être amorties, les pôles (13, 14, 15, 16) des moyens magnétiques permanents (10, 11) étant disposés dans au moins un plan radial, les moyens magnétiques permanents (10, 11) ayant plusieurs éléments magnétiques permanents (17) étant disposés adjacents les uns aux autres dans la direction circonférentielle,
lesdits éléments magnétiques permanents (17) étant adjacents, notamment directement jointifs ou étant fixés les uns aux autres par une couche adhésive ayant une épaisseur de moins de 2 mm,
et/ou
les moyens magnétiques permanents (10, 11) comprenant au moins une pièce moulée en matière plastique, notamment une pièce moulée par injection en matière plastique et/ou une pièce moulée en matière frittée,
et/ou
les moyens magnétiques permanents (10, 11) étant disposés sur une trajectoire annulaire géométrique, de préférence concentrique, de préférence une trajectoire elliptique, (27, 28) s'écartant d'une trajectoire circulaire concentrique,
**caractérisé en ce que**
la faculté de rotation relative des moyens d'entraînement (2) et des moyens de sortie (3) est limitée par au moins une liaison d'entraînement (5, 6) mécanique, de préférence plusieurs liaisons de connexion (5, 6) mécaniques étant disposées sur une trajectoire circulaire qui est concentrique à l'axe de rotation (4) ou sur une trajectoire annulaire non-circulaire.

2. Dispositif selon la revendication 1,
**caractérisé en ce que**
les moyens magnétiques permanents (10, 11) sont adhérés et/ou fixés mécaniquement aux, de préférence matés sur, les moyens d'entraînement (2) et/ou les moyens de sortie (3).

3. Dispositif selon la revendication 1 ou la revendication 2,
**caractérisé en ce que**
les moyens magnétiques permanents (10, 11) sont logés sans des produits d'étanchéité dans une cavité frontale, notamment une rainure (20) qui s'étend dans la direction circonférentielle, dans les moyens d'entraînement (2) et/ou les moyens de sortie (3).

4. Dispositif selon l'une quelconque des revendications précédentes,
**caractérisé en ce que**
les éléments magnétiques permanents (17) adjacents des moyens magnétiques permanents (10, 11) ont une forme d'un segment annulaire, notamment une forme d'un segment d'un anneau circulaire ou une forme d'un segment d'un anneau elliptique.

5. Dispositif selon l'une quelconque des revendications précédentes,
**caractérisé en ce que**
les éléments magnétiques permanents (17) adjacents sont adjacents les uns aux autres par une surface de contact (18, 19) qui est située dans un plan radial par rapport à un axe de rotation (4) du dispositif.

6. Dispositif selon l'une quelconque des revendications précédentes,
**caractérisé en ce**
**qu'**au moins une pièce moulée en matière plastique a une forme d'anneau, notamment une forme d'anneau circulaire ou une forme d'anneau elliptique, ou une forme d'un segment annulaire, notamment une forme d'un segment d'un anneau circulaire ou une forme d'un segment d'un anneau elliptique, qui s'étend, de préférence, autour de l'axe de rotation (4) sur un angle circonférentiel d'au moins 45°, de préférence d'au moins 90°, plus préférentiellement d'au moins 120°.

7. Dispositif selon l'une quelconque des revendications précédentes,
**caractérisé en ce que**
les éléments magnétiques permanents (17) et/ou les moyens magnétiques permanents (10, 11) disposés sur une trajectoire annulaire (27, 28) qui s'écarte d'une trajectoire circulaire sont réalisés en matière pleine qui est magnétique en permanence, de préférence en matière magnétique dure, et/ou comme pièces moulées en matière plastique et/ou comme pièces moulées en matière frittée.

8. Dispositif selon l'une quelconque des revendications précédentes,
**caractérisé en ce que**
la trajectoire annulaire (27, 28) géométrique qui s'écarte d'une trajectoire circulaire concentrique est symétrique.

9. Dispositif selon l'une quelconque des revendications précédentes,
**caractérisé en ce que**
seulement les moyens d'entraînement (2) ont des moyens magnétiques permanents (10, 11) pour transmettre des couples et les moyens de sortie (3) ont une section de matériau assignée auxdits moyens, notamment un insert d'une matière formée d'un matériau conducteur de flux magnétique, ou vice-versa.

10. Dispositif selon l'une quelconque des revendications précédentes,
**caractérisé en ce que**
les moyens d'entraînement (2) et les moyens de sortie (3) ont chacun un seul disque de transmission de couple (24, 25), les disques de transmission de couple étant axialement opposés les uns aux autres, notamment avec un espace (12) intermédiaire, ou que les moyens d'entraînement (2) ont au moins deux disques de transmission de couple qui prennent un disque de transmission de couple des moyens de sortie (3) en sandwich entre eux, ou que les moyens de sortie (3) ont au moins deux disques de transmission de couple qui prennent un disque de transmission de couple des moyens d'entraînement (2) en sandwich entre eux.

11. Système comprenant un dispositif selon l'une quelconque des revendications précédentes, le dispositif étant couplé à un organe auxiliaire, notamment un alternateur, de préférence dans un véhicule automobile, pour transmettre des couples.
